Europäisches Patentamt

European Patent Office

Office européen des brevets

(19)

(11) Veröffentlichungsnummer: **0 257 223**
A1

## (12) EUROPÄISCHE PATENTANMELDUNG

(21) Anmeldenummer: 87108824.1

(22) Anmeldetag: 19.06.87

(51) Int. Cl.⁴ **H02G 15/18** , H01B 13/10 ,
F16L 59/14 , B29C 61/06

(30) Priorität: 16.08.86 DE 3627911
18.09.86 DE 3631698

(43) Veröffentlichungstag der Anmeldung:
02.03.88 Patentblatt 88/09

(84) Benannte Vertragsstaaten:
AT BE CH DE ES FR GB GR IT LI NL SE

(71) Anmelder: Kabelmetal electro Gesellschaft
mit beschränkter Haftung
Kabelkamp 20 Postfach 260
D-3000 Hannover 1(DE)

(72) Erfinder: Marx, Karl-Heinz, Ing.
Zehntweg 25
D-3008 Garbsen 9(DE)
Erfinder: Voigt, Hermann-Uwe, Dr.rer.nat.
Seilerstrasse 49
D-3060 Stadthagen(DE)
Erfinder: Patzke, Frank
Im Dorfe 3
D-3013 Barsinghausen 4(DE)

(54) **Band aus einem bei Wärmezufuhr schrumpfbaren vernetzten Kunststoff.**

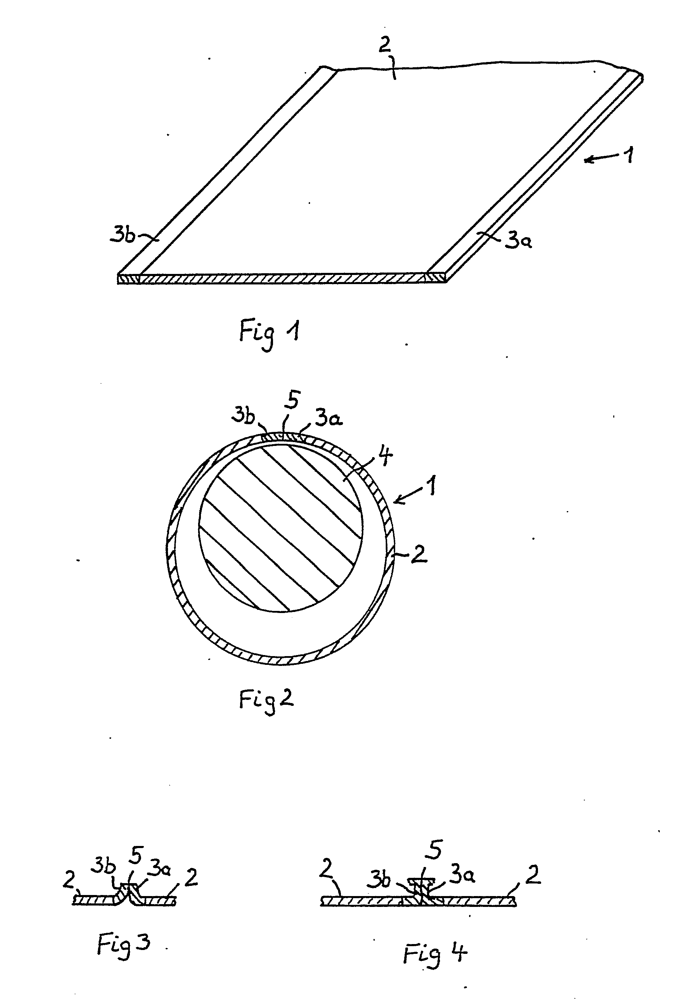

(57) Bei einem Band aus einem bei Wärmezufuhr - schrumpfbaren vernetzten Kunststoff, welches nach Art einer Manschette (2) um einen langgestreckten Gegenstand (4) herumlegbar ist und nach dem Verbinden der Bandkanten (3a,3b) durch Wärmezufuhr auf den Gegenstrand (4) schrumpfbar ist, bestehen die Bandkantenbereiche (3a,3b) aus nicht vernetztem Kunststoff und erfolgt die Verbindung (5) der Bandkanten (3a,3b) durch Schmelzschweißen (Figur 2).

Fig 2

EP 0 257 223 A1

## Band aus einem bei Wärmezufuhr schrumpfbaren vernetzten Kunststoff

Die Erfindung betrifft ein Band aus einem bei Wärmezufuhr schrumpfbaren vernetzten Kunststoff, welches nach Art einer Manschette um einen langgestreckten Gegenstand herumgelegt und nach dem Verbinden der Bandkanten durch Wärmezufuhr auf den Gegenstand schrumpfbar ist.

Für die nachträgliche Isolierung und Abdeckung von Verbindungsstellen von elektrischen Kabeln oder Leitungen werden seit langem Schrumpfschläuche verwendet, die über die Verbindungsstelle geschoben und dann auf die Verbindungsstelle aufgeschrumpft werden. Für die nachträgliche Abdeckung bzw. Isolierung von Verbindungsstellen bereits verbundener elektrischer Kabel haben sich Manschetten aus wärmeschrumpfbarem Kunststoff durchgesetzt, die als Band um die Verbindungsstelle herumgelegt, an ihren Längskanten mechanisch fest verbunden und anschließend auf die Verbindungsstelle aufgeschrumpft werden. Die Verbindung der Längskanten erfolgt beispielsweise durch Klemmschienen, aber auch durch Verkleben der einander überlappenden Bandkanten (DE-AS 15 25 815).

Der Längsschlitz einer solchen Muffe wird zur zusätzlichen Abdichtung häufig noch mit einer mit der Manschette verklebbaren Lasche oder Zunge unterlegt.

Zur Herstellung eines Abzweiges in einer solchen Muffe wird das Band, aus dem die Manschette gebildet ist, vor dem Schrumpfen zwischen den abzweigenden Leitungen mittels einer Klemme zusammengehalten.

Nachteilig bei diesen bekannten Konstruktionen ist, daß durch die Verschlußschienen und die für den Eingriff der Verschlußschiene erforderlichen Randverdickungen der Manschette eine vielfach störende verdickte Längsnaht entsteht. Ein weiterer Nachteil ist darin zu sehen, daß große Längen von Kabeln oder Rohren oder Leitungen mit solchen Manschetten nicht einstückig bzw. kontinuierlich umhüllt werden können.

Der vorliegenden Erfindung liegt von daher die Aufgabe zugrunde, ein Band anzugeben, welches ohne zusätzliche Verschlußelemente, wie z.B. Verschlußschienen, um Kabel, Rohre oder Leitungen herumgelegt und verschlossen werden kann und welches darüber hinaus geeignet ist, Kabel, Rohre oder Leitungen größerer Länge kontinuierlich zu ummanteln.

Diese Aufgabe wird dadurch gelöst,daß die zu verbindenden Bandkantenbereiche aus nicht vernetztem Kunststoff bestehen und die Verbindung der Bandkanten durch Schmelzschweißen erfolgt. Durch die Erfindung wird die vor dem Schrumpfen erforderliche feste Verbindung der Bandkanten durch Schweißen erreicht. Neben der hohen mechanischen Festigkeit der Schweißnaht entsteht darüber hinaus noch der Vorteil, daß die Schweißnaht gegenüber einer durch Verschlußschienen zusammengehaltenen oder verklebten Naht wesentlich dichter gegen Eindringen von Feuchtigkeit ist. Die Ausbildung der Bandkantenbereiche aus nicht vernetztem Kunststoff ist aus dem Grunde erforderlich, da sich vernetzte Kunstoffe nicht verschweißen lassen. Damit genügend Material für die Schweißnaht zur Verfügung steht, hat es sich als zweckmäßig erwiesen, die Bandkantenbereiche gegenüber der Wanddicke des Bandes verdickt auszubilden. Diese verdickten Randbereiche haben darüber hinaus noch den Vorteil, daß sie für den Reckvorgang herangezogen werden können. Als Material für das Band kann nahezu jeder beliebige vernetzbare Kunststoff verwendet werden. Es hat sich jedoch als vorteilhaft erwiesen, das Band aus einem vernetzten Polyäthylen herzustellen, dem Silangruppen aufgepfropft sind, wobei die Bandkantenbereiche aus nicht vernetztem Polyäthylen bestehen. Ein mit Silangruppen gepfropftes Polyäthylen läßt sich ohne großen maschinellen Aufwand leicht vernetzten. Ist es beispielsweise erforderlich, daß auch der Bereich der Schweißnaht vernetzt ist, so kann man dies dadurch erreichen, daß die Bandkantenbereiche aus einem peroxydisch vernetzbaren Polyäthylen bestehen. Der Schweißnahtbereich wird dann nach dem Verschweißen durch zusätzliche Erwärmung, durch welche das Vernetzungsmittel, d.h. in diesem Fall die Peroxyde, aktiviert werden, vernetzt. Zumindest eine der Oberflächen des Bandes ist, wie an sich bekannt, mit einem Dicht-, Korrosionsschutz-und/oder Klebemittel beschichtet. Das Band ist zweckmäßigerweise einstückig extrudiert.

Die Erfindung betrifft weiterhin ein Verfahren zur Herstellung eines Bandes wie oben beschrieben, welches sich dadurch auszeichnet, daß ein Band aus vernetzbarem Kunststoff mittels eines Extruders und eines als Breitschlitzdüse ausgebildeten Formwerkzeuges extrudiert wird, daß innerhalb des Formwerkzeuges an die Längskanten des Bandes je ein Streifen aus einem vom Kunststoffmaterial des Bandes unterschiedlichen Kunststoff angeformt wird, daß der Kunststoff des Bandes vernetzt wird, wobei die durch die Streifen gebildeten Randbereiche des Bandes unvernetzt bleiben, daß nach dem Vernetzen das Band auf eine Temperatur oberhalb des Kristallitzschmelzpunktes erwärmt, quer zur Längsrichtung des Bandes gereckt und abschließend im gereckten Zustand abgekühlt wird. Mit Hilfe des erfindungsgemäßen Verfahrens ist es gelungen, Bänder, die quer zu ihrer Längsrichtung schrumpfbar sind, in nahezu unendlicher Länge herzustellen. Die Vernetzung wird zweckmäßigerweise bei Gegenwart von Feuchtigkeit vorgenommen, wozu es erforderlich ist, daß ein mit Silan gepfropftes Polyäthylen verwendet wird. Die Randbereiche des Bandes werden gegenüber der Wanddicke des Bandes verdickt extrudiert und dienen als Kraftangriffsbereich beim kontinuierlichen Reckvorgang bzw. als Zusatzschweißmaterial. Dabei ist es erforderlich, daß durch die Reckvorrichtung die Randbereiche gekühlt werden, um die erforderliche Reckkraft auf das Band aufbringen zu können. Das Verfahren zur Herstellung des Bandes beschränkt sich nicht auf feuchtigkeitsvernetzte Kunststoffe, sondern ist in gleicher Weise einsetzbar für Kunststoffe, die mittels energiereicher Strahlung vernetzt werden. Hierbei werden während der Vernetzung die Kantenbereiche des Bandes abgedeckt und somit nicht vernetzt.

Das genannte Verfahren ist nur sinnvoll, wenn es sich um die Herstellung von Bändern großer Länge handelt und möglichst nur eine Bandbreite gefertigt wird, damit nicht zu viele Formwerkzeuge vorgehalten werden müssen. Für die Herstellung komplizierter Formen, d.h. mit winklig zueinander angeordneten Verbindungskanten, wie z.B. für T-Stücke bzw. auch gekrümmte Verbindungsstücke oder aber auch, wenn die Verbindungsnähte quer oder unter einem Winkel zur Extrusionsrichtung bzw. zur Schrumpfrichtung angebracht werden sollen, ist diese Vorgehensweise nicht durchführbar.

Für den genannten Zweck wird ein Verfahren vorgeschlagen, das sich dadurch auszeichnet, daß an die für die Verbindung vorgesehenen Bandkanten nach der Herstellung des Bandes durch Extrusion oder Spritzgießen jedoch vor dem Vernetzen streifenförmiges Kunststoffmaterial durch Schmelzschweißen angeformt wird, daß der Kunststoff des Bandes vernetzt wird, wobei die durch die Streifen gebildeten Randbereiche des Bandes unvernetzt bleiben, daß nach dem Vernetzen das Band auf eine Temperatur oberhalb des Kristallitschmelzpunktes erwärmt, quer zur Längsrichtung der angeschweißten Streifen gereckt und abschließend im gereckten Zustand abgekühlt wird. Hierdurch gelingt es, beispielsweise kreuzförmige Formteile mit verschweißbaren Kanten herzustellen, die beispielsweise zur Herstellung eines T-Abzweiges benötigt werden. Auf eine relativ aufwendige Koextrusionsanlage kann bei diesem Vorgehen ebenfalls verzichtet werden.

Die Vernetzung erfolgt dabei zweckmäßigerweise ebenfalls durch Feuchtigkeitseinwirkung oder durch energiereiche Strahlen.

Die Kunststoffstreifen können bei einem extrudierten Band unmittelbar nach dem Austritt des Bandes aus dem Mundstück angeschweißt werden. Es besteht jedoch auch die Möglichkeit, das Kunststoffband nach herkömmlicher Technik zu fertigen und die Kunststoffstreifen später anzubringen. Diese Vorgehensweise hat sich insbesondere dann von Vorteil erwiesen, wenn relativ schmale Bänder mit schweißbaren Kunststoffstreifen versehen werden sollen. In diesem Fall hat es sich als zweckmäßig erwiesen, zunächst ein Band großer Breite zu extrudieren, dieses Band längs zu teilen und an die Längskanten die Kunststoffstreifen anzuschweißen. Bei der Herstellung von Formteilen geht man zweckmäßigerweise so vor, daß die Formteile aus einem extrudierten Band ausgeschnitten oder ausgestanzt werden und an die für die Verbindung vorgesehenen Kanten die Kunststoffstreifen angeschweißt werden. Dabei kann es für manche Anwendungsfälle von Vorteil sein, die Schnitt-oder Stanzlinien unter einem kleineren Winkel als 90 Grad, vorzugsweise unter 45 Grad, zur Längsrichtung des extrudierten Bandes bzw. zur Schrumpfrichtung verlaufen zu lassen. Diese Vorgehensweise ist insbesondere dann von Vorteil, wenn die Bänder zur Umhüllung von relativ einfachen langgestreckten Gebilden verwendet werden sollen. Der winklige Verlauf der Schnitt-oder Stanzlinien und eine Reckung des Bandes in Extrusionsrichtung hat dann zur Folge, daß die Schweißnaht ebenfalls unter einem Winkel zur Schrumpfrichtung gelegen ist. Dadurch kann die Schweißnaht entlastet werden bzw. der Schweißnahtfaktor erhöht werden.

Die Erfindung betrifft weiterhin ein Verfahren zur Herstellung einer Umhüllung für langgestrecktes Gut unter Verwendung eines Bandes nach einem oder mehreren der vorgenannten Ansprüche. Das Band wird dabei nach Art einer Manschette um den Gegenstand herumgelegt, an seinen Randbereichen verschweißt und anschließend geschrumpft. Dabei erfolgt die Verschweißung zweckmäßigerweise durch Spiegelschweißen. Beim Spiegelschweißen werden die zu verschweißenden Bandkantenbereiche mittels eines beheizten Werkzeuges, beispielsweise einer Zunge oder eines Spiegels, auf Schmelztemperatur gebracht und gegeninander gepreßt, bis die Schmelzzone erstarrt ist. Um einer über den gesamten Umfang durchgehend vernetzte Manschette bzw. Umhüllung zu erreichen, werden die Randbereiche während oder nach der Verschweißung vernetzt. Hierbei ist es zweckmäßig, wie bereits erwähnt, die Randbereiche aus einem peroxydisch vernetzbaren Kunststoff zu extrudieren.

Die Erfindung betrifft weiterhin ein Verfahren zur kontinuierlichen Umhüllung von durchlaufendem langgestreckten Gut. Hierbei wird das von einer Vorratsspule ablaufende Band kontinuierlich um das durchlaufende langgestreckte Gut zu einem Schlitzrohr geformt, an seinen Längskanten verschweißt und nach dem Schweißen zum Schrumpfen gebracht. Mit besonderem Vorteil läßt sich das genannte Verfahren zum Umhüllen von gewellten Metallrohren verwenden, wobei die Schrumpfung so durchgeführt wird, daß das Bandmaterial nahezu dem Wellenverlauf des Metallrohres folgt. Für das unmantelte Metallrohr entsteht dadurch der Vorteil, daß die eigentliche Flexibilität des metallischen Wellrohres durch den zusätzlichen Kunststoffmantel nicht wesentlich eingeschränkt wird. Bei ummantelten Wellrohren, die nach der herkömmlichen Technik hergestellt wurden, bei denen ein glatter Kunststoffmantel auf die Wellenberge des Wellrohren aufextrudiert wurde, war die Flexibilität sehr stark eingeschränkt.

Um eine saubere Oberfläche der Umhüllung zu erreichen, hat es sich als zweckmäßig erwiesen, nach dem Verschweißen die im Bereich der Schweißnaht gelegene Verdickung zu entfernen und danach die Umhüllung auf das Metallwellrohr aufzuschrumpfen. Weitere Gegenstände der Erfindung sind verschiedene Muffen unter Verwendung eines erfindungsgemäßen Bandes. Bei einer Abzweigmuffe besteht die Muffe aus zwei Bändern, die an ihren Längskanten miteinander stumpf verschweißt sind. Die Abzweige werden durch nochmalige Verschweißung einer bestimmten Länge der Schweißnähte gebildet. Bei einer T-förmigen Abzweigmuffe ist die Muffe aus einem kreuzförmigen Band hergestellt, welches über den T-förmigen Abzweig gelegt und an den Berührungslinien verschweißt ist. Eine Doppel-T-förmige Abzweigmuffe zeichnet sich dadurch aus, daß zwei identische kreuzförmige Bänder übereinandergelegt und an den in Längsrichtung des Kabels bzw. der Leitung oder des Rohres verlaufenden Berührungskanten verschweißt sind.

Die Erfindung ist anhand der in den Figuren 1 bis 13 schematisch dargestellten Ausführungsbeispiele näher erläutert.

Die Figur 1 zeigt ein Band aus einem Kunststoff, dessen Mittelbereich 2 vernetzt und dessen Randbereiche 3a und 3b unvernetzt sind. Der Bereich 2 besteht zweckmäßigerweise aus Polyäthylen, dem Silane aufgepfropft sind und welcher bei Anwesenheit von Feuchtigkeit vernetzt. Die Randbereiche 3a und 3b bestehen ebenfalls aus Polyäthylen, dem Peroxyde beigefügt sind, die nach dem Verschweißen bzw. während des Verschweißens eine Vernetzung der Randbereiche 3a und 3b ermöglichen.

Die Figur 2 zeigt einen Schnitt durch einen zu umhüllenden Gegenstand 4, der von dem Band 1 umhüllt ist. Die Randbereiche 3a und 3b sind bei 5 miteinander verschweißt. Nach dem Verschweißen der Randbereiche 3a und 3b wird das Band 1, welches im Bereich 2 vorgereckt ist, auf den Umfang des Gegenstandes 4 geschrumpft.

Die Figuren 3 und 4 zeigen verschiedene Ausführungsformen der Schweißnaht 5. Bei dem Ausführungsbeispiel nach der Figur 3 sind die Bandkantenbereiche nach oben gezogen, wodurch der Schweißnaht 5 mehr Material zur Verfügung gestellt wird. Die der Schweißnaht 5 abgekehrten Oberflächen der Randbereiche 3a und 3b bilden Angriffsbereiche für Andruckrollen.

Bei dem Ausführungsbeispiel nach der Figur 4 sind die Randbereiche 3a und 3b in Form von Stegen an das Band 2 angeformt, wobei auch hier die der Schweißnaht 5 abgekehrten Flächen der Randbereiche 3a und 3b dem Kraftangriff von Andrückrollen dienen.

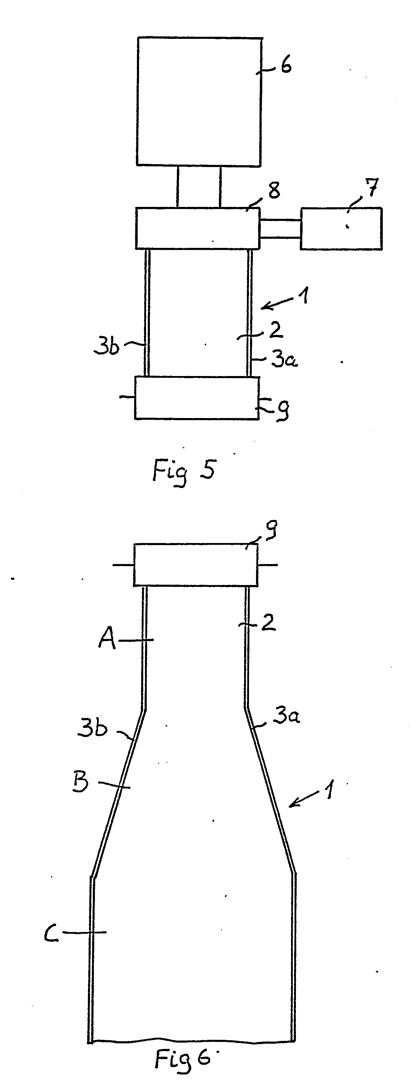

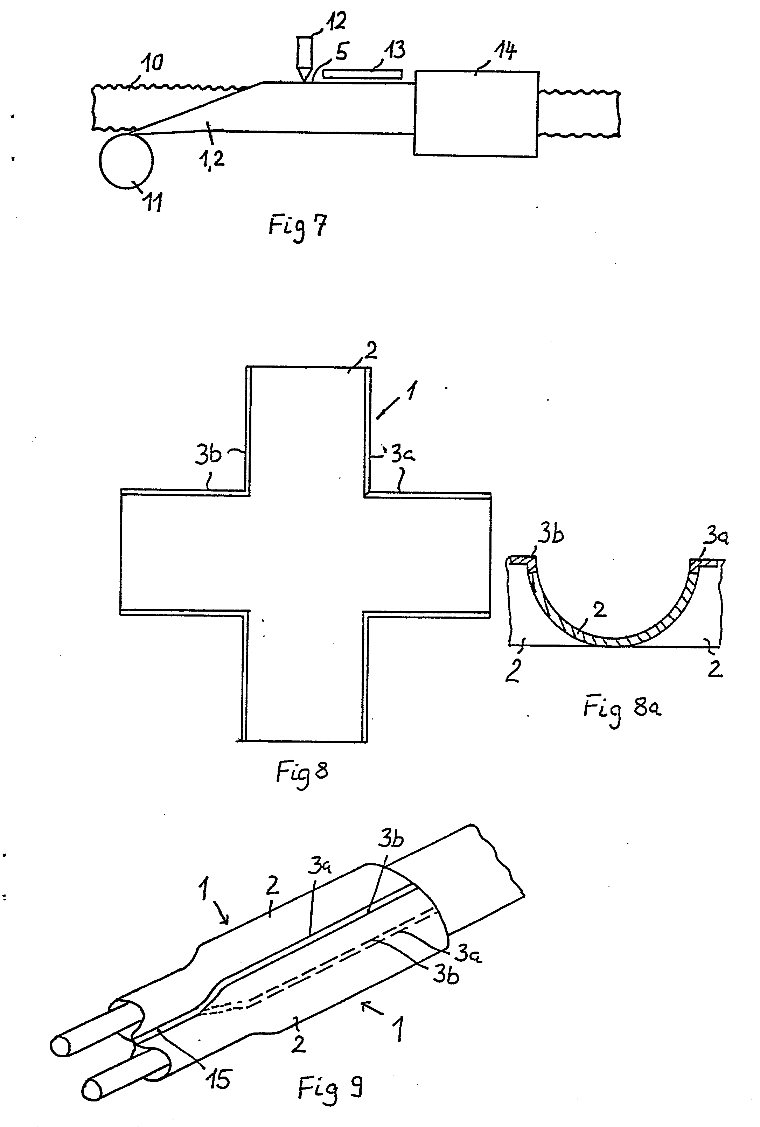

Die Figuren 5 und 6 zeigen in der Draufsicht - schematisch die Herstellung eines Bandes 1. Mittels einer Koextrusionsanlage, die aus einem Extruder 6 und einem Extruder 7 besteht, die gemeinsam die Kunststoffmassen einem gemeinsamen Mundstück 8, d.h. einer Breitschlitzdüse zuführen, wird das Band 1, bestehend aus dem Mittelteil 2 und den Randbereichen 3a und 3b, extrudiert, abgekühlt und auf eine Spule 9 aufgewickelt. Das auf die Spule 9 aufgewickelte Band 1 wird dann vernetzt - im Falle von feuchtigkeitsvernetzbarem Polyäthylen - wird die Spule in einen mit Wasserdampf gefüllten Ofen eingebracht und dort mehrere Stunden gelagert. Das vernetzte Band 1 wird dann von der Spule 9 kontinuierlich abgezogen, in einer ersten Stufe A allmählich bis auf eine Temperatur oberhalb der Kristallitschmelztemperatur des Kunststoffes erwärmt, in einer zweiten Stufe B kontinuierlich quer zur Längsrichtung des Bandes 1 gereckt und in einer Stufe C im gereckten Zustand abgekühlt. Das abgekühlte gereckte Band 1 kann dann wiederum auf nicht dargestellte Spulen aufgewickelt oder aber in der gewünschten Form abgelängt werden.

Die Figur 7 zeigt ein Verfahren in schematischer Darstellung, mit dem ein metallisches Wellrohr 10 kontinuierlich mit einem Kunststoffband aus vernetztem Werkstoff umhüllt werden kann. Um das kontinuierlich zugeführte Metallwellrohr 10, hierbei kann es sich jedoch auch um ein Glattrohr handeln, wird das von einer Vorratsspule 11 abgezogene Band 1 zu einem Schlitzrohr geformt, im Bereich seiner Bandkanten mittels einer Spiegelschweißeinrichtung 12 verschweißt und in nicht dargestellter Weise der Schweißgrat entfernt. Mittels einer Nachwärmvorrichtung 13 wird die Schweißnaht 5 so weit erwärmt, daß die Peroxyde zerfallen und das Kunststoffmaterial der Schweißnaht 5 sowie der angrenzenden Bereiche vernetzt wird. Das so umhüllte Rohr wird dann in einen Durchlaufofen 14 eingeführt, in dem das Kunststoffband auf Schrumpftempertaur gebracht wird, so daß es sich der Wellenform des Wellrohres 10 folgend auf dieses auflegt.

Die Figur 8 zeigt in der Draufsicht ein vorgerecktes Band 1, welches kreuzförmig durch Spritzgießen hergestellt ist. Die Randbereiche 3a und 3b aus unvernetztem Kunststoff sind beim Spritzgießen mit angeformt. Das dargestellte Band ist biaxial, d.h. in zwei senkrecht zueinander stehenden Achsen, die dem Verlauf der Kreuzbalken folgen, gereckt, Ein solches Band kann zur Herstellung einer T-Abzweigverbindung eingesetzt werden, indem das Band um den T-Abzweig herumgelegt und an seinen Bandkanten 3a und 3b verschweißt wird. Nach dem Verschweißen wird - wie oben beschrieben - geschrumpft. Die Reckung des Bandes 2 kann auch dadurch erzielt werden, daß die Mittelbereiche 2 der das Kreuz bildenden Balken im Querschnitt halbkreisförmig gereckt werden (siehe Figur 8a). Zur Herstellung eines Doppel-T-Abzweiges werden zwei der in den Figuren 8 bzw. 8a dargestellten Bänder 1 über den Doppel-T-Abzweig gelegt, an den Kanten 3a und 3b verschweißt und anschließend geschrumpft.

Die Figur 9 zeigt eine Abzweigmuffe, wie sie beispielsweise in der Nachrichtentechnik zur Abzweigung von Kabeln dienen. Um die nicht sichtbare Abzweigstelle wird ein aus zwei Einzelbändern 1 hergestelltes Band, welches durch Verschweißen der Längskanten 3a und 3b hergestellt ist, herumgelegt und an seinen noch nicht verbundenen Längskanten 3a und 3b (in der Figur 9 obenliegend) verschweißt. Im Bereich des Abzweigs werden die beim Verbinden der Bänder bzw. des Bandes erzeugten Schweißnähte miteinander verschweißt, wie bei 15 dargestellt und anschließend die Abzweigmuffe geschrumpft. Wie bei allen auf der Baustelle herzustellenden Schweißnähten wird auch die Schweißnaht 15 durch Spiegelschweißen mit einem elektrisch oder gasbeheizten Spiegel hergestellt.

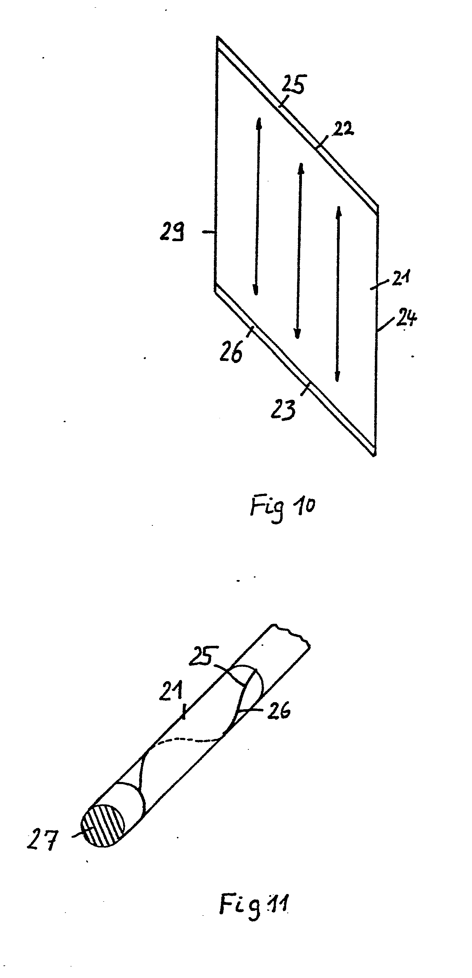

In der Figur 10 ist ein Formteil 21 dargestellt, welches aus einem extrudierten Band aus vernetzbarem Kunststoff in Form eines Parallelogramms ausgeschnitten oder ausgestanzt wurde. Die Schnittkanten 22 und 23 verlaufen zweckmäßigerweise unter einem Winkel von 45 Grad zur Richtung der Kanten 24 und 29. An die Schnittkanten 22 und 23 werden Kunststoffstreifen 25 und 26, vorzugsweise durch Spiegelschweißen angeschweißt. Das so vorbereitete Formteil wird dann vernetzt, wobei die Kunststoffstreifen 25 und 26 unvernetzt bleiben. Nach der Vernetzung wird das Formteil 21 auf eine Temperatur oberhalb des Kristallitschmelzpunktes des Kunststoffes erwärmt und in Pfeilrichtung gereckt. In diesem gereckten Zustand wird das Formteil 21 abgekühlt.

Das Formteil 21 kann dann, wie in der Figur 11 dargestellt, um ein langgestrecktes Gut 27 herumgelegt werden, und zwar dergestalt, daß die Kunststoffstreifen 25 und 26 aneinanderstoßen und wendelartig um die Mittelachse des langgestreckten Gutes 27 herumlaufen. Die Kunststoffstreifen 25 und 26 können dann miteinander verschweißt werden, beispielsweise durch Spiegelschweißen. Durch Erwärmung des Kunststoffbandes 21 wird dieses auf den Umfang des langgestreckten Gutes 27 heruntergeschrumpft. Dadurch, daß die Schweißnaht zwischen des Kunststoffstreifen 25 und 26 unter einem Winkel von 45 Grad zur Richtung der Schrumpfkräfte verläuft, ist die Schweißnaht entlastet. Zwecks Anpassung an das vernetzte Material des Kunststoffbandes 21 können die Randstreifen 25 und 26 vor oder nach dem Schrumpfen ebenfalls vernetzt werden. Dies kann z.B. dadurch erreicht werden, daß man als Material für das Kunststoffband ein mit Silan gepfropftes Polyäthylen verwendet, welches bei Anwesenheit von Feuchtigkeit vernetzt werden kann oder ein strahlenvernetzbares Material verwendet und als Material für die Kunststoffstreifen 25 und 26 ein peroxydisch vernetzbares Kunststoffmaterial verwendet, welches durch Temperaturerhöhung auf eine Temperatur oberhalb der Zersetzungstemperatur der Peroxyde vernetzt werden kann, wobei bei niedriger Temperatur anspringende Peroxide oder andere Radikalinitiatoren eingesetzt werden.

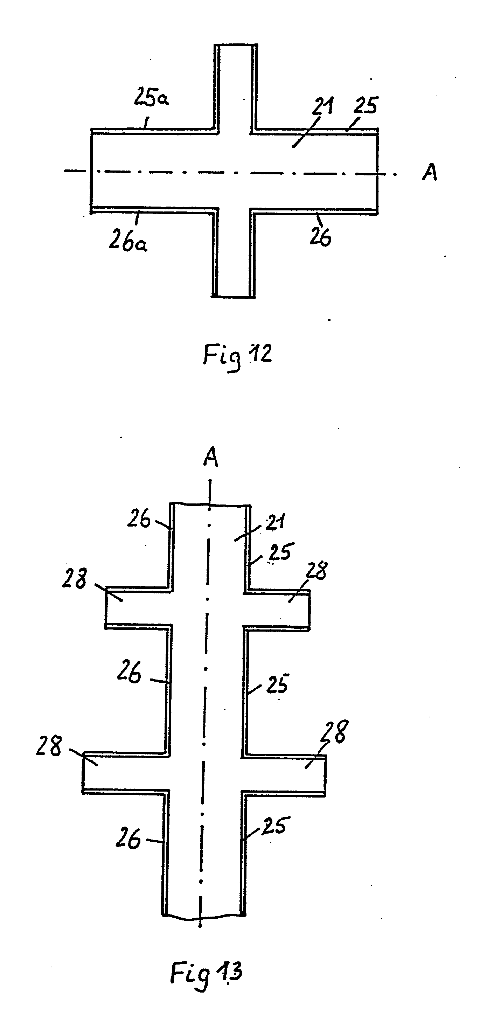

Die Figur 12 zeigt ein anderes Ausführungsbeispiel für ein Formteil, welches nach der Lehre der Erfindung hergestellt ist. Aus einem extrudierten Band wird ein kreuzförmiges Formteil 21 ausgestanzt oder ausgeschnitten, an dessen Kanten im noch nicht vernetzten Zustand Kunststoffstreifen 25, 25a 26 und 26a angeschweißt werden. Ein solches Formteil kann beispielsweise durch Umklappen um die Achse A zu einem T-Abzweig geformt und die Bandkantenbereiche 25 und 26 sowie 25a und 26a miteinander verschweißt werden. Derartige T-Stücke finden Verwendung im Rohrleitungsbau bzw. auch im Gerüstbau zum Überschrumpfen von T-Abzweigen.

Die Figur 13 zeigt ein weiteres Ausführungsbeispiel für ein Formteil 21, welches mehrere Arme 28 aufweist und an dessen Bandkanten Kunststoffstreifen 25 und 26 angeschweißt sind. Durch Umklappen des Bandes 21 um die Achse A kann ein Gebilde erzielt werden, welches eine Aneinanderreihung von mehreren T-Abzweigen bildet. Derartige Schrumpfformteile können beispielsweise Anwendung finden zum Umschrumpfen von sogenannten Kabelbäumen, wie sie in der Autoelektrik oder in der allgemeinen elektrischen Installationstechnik üblich sind.

## Ansprüche

1. Band aus einem bei Wärmezufuhr - schrumpfbaren vernetzten Kunststoff, welches nach Art einer Manschette um einen langgestreckten Gegenstand herumlegbar und nach dem Verbinden der Bandkanten durch Wärmezufuhr auf den Gegenstand schrumpfbar ist, dadurch gekennzeichnet, daß die zu verbindenden Bandkantenbereiche (3a,3b,25,26) aus nicht vernetztem Kunststoff bestehen und die Verbindung der Bandkanten durch Schmelzschweißen erfolgt.

2. Band nach Anspruch 1, dadurch gekennzeichnet, daß die Bandkantenbereiche (3a,3b,25,26) gegenüber der Wanddicke des Bandes (2,21) verdickt sind.

3. Band nach Anspruch 1 oder 2, dadurch gekennzeichnet, daß das Band (2,21) aus vernetztem Polyäthylen besteht, dem Silangruppen aufgepfropft sind und die Bandkantenbereiche (3a,3b,25,26) aus nicht vernetztem Polyäthylen bestehen.

4. Band nach einem oder mehreren der Ansprüche 1 bis 3, dadurch gekennzeichnet, daß die Bandkantenbereiche (3a,3b,25,26) aus einem peroxydisch vernetzbaren Polyäthylen bestehen.

5. Band nach einem oder mehreren der ASnsprüche 1 bis 4, dadurch gekennzeichnet, daß zumindest eine Oberfläche des Bandes (1,2,21) mit einem Dicht-, Korrosionsschutz-und/oder Klebemittel beschichtet ist.

6. Band nach einem oder mehreren der Ansprüche 1 bis 5, dadurch gekennzeichnet, daß das Band (1,2,21) einstückig extrudiert ist.

7. Verfahren zur Herstellung eines Bandes nach einem oder mehreren der Ansprüche 1 bis 6, dadurch gekennzeichnet, daß ein Band aus vernetzbarem Kunststoff mittels eines Extruders und eines als Breitschlitzdüse ausgebildeten Formwerkzeuges extrudiert wird, daß innerhalb des Formwerkzeuges an die Längskanten des Bandes je ein Streifen aus einem vom Kunststoffmaterial des Bandes unterschiedlichen Kunststoff angeformt wird, daß der Kunststoff des Bandes vernetzt wird, wobei die durch die Streifen gebildeten Randbereiche des Bandes unvernetzt bleiben, daß nach dem Vernetzen das Band auf eine Temperatur oberhalb des Kristallitschmelzpunktes erwärmt, quer zur Längsrichtung des Bandes gereckt und abschließend im gereckten Zustand abgekühlt wird.

8. Verfahren nach Anspruch 7, dadurch gekennzeichnet, daß die Vernetzung bei Gegenwart von Feuchtigkeit vorgenommen wird.

9. Verfahren nach Anspruch 7 oder 8, dadurch gekennzeichnet, daß die Randbereiche des Bandes gegenüber der Wanddicke des Bandes verdickt extrudiert werden und daß die Randbereiche als Kraftangriffsbereich beim kontinuierlichen Reckvorgang dienen.

10. Verfahren zur Herstellung eines Bandes nach einem oder mehreren der Ansprüche 1 bis 6, dadurch gekennzeichnet, daß ein Band aus einem vernetzbaren Kunststoff extrudiert, daß der Kunststoff durch energiereiche Strahlung vernetzt wird, wobei die Kantenbereiche des Bandes abgedeckt und somit nicht vernetzt werden, daß das Band über den Kristallitschmelzpunkt des Kunststoffes erwärmt, quer zur Längsrichtung des Bandes gereckt und im gereckten Zustand abgekühlt wird.

11. Verfahren zur Herstellung eines Bandes nach einem oder mehreren der Ansprüche 1 bis 6, dadurch gekennzeichnet, daß an die für die Verbindung vorgesehenen Bandkanten nach der Herstellung des Bandes durch Extrusion oder Spritzgießen jedoch vor der Vernetzung streifenförmiges Kunststoffmaterial durch Schmelzschweißen angeformt wird, daß der Kunststoff des Bandes vernetzt wird, wobei die durch die Streifen gebildeten Randbereiche des Bandes unvernetzt bleiben, daß nach dem Vernetzen das Band auf eine Temperatur oberhalb des Kristallitschmelzpunktes erwärmt, quer zur Längsrichtung des angeschweißten Streifen gereckt und abschließend im gereckten Zustand abgekühlt wird.

12. Verfahren nach Anspruch 11, dadurch gekennzeichnet, daß bei einem extrudierten Band die Kunststoffstreifen unmittelbar nach dem Austritt des Bandes aus dem Mundstück an dessen Längskanten angeschweißt werden.

13. Verfahren nach Anspruch 11, dadurch gekennzeichnet, daß ein Band großer Breite extrudiert wird, daß dieses Band längsgeteilt wird und daß an die Längskanten die Kunststoffstreifen angeschweißt werden.

14. Verfahren nach Anspruch 11 zur Herstellung von bandförmigen Formteilen, dadurch gekennzeichnet, daß die Formteile aus einem extrudierten Band ausgeschnitten oder ausgestanzt werden und daß an die für die Verbindung vorgesehenen Kanten die Kunststoffstreifen angeschweißt werden.

15. Verfahren nach Anspruch 14, dadurch gekennzeichnet, daß die Schnitt-oder Stanzlinien unter einem kleineren Winkel als 90 Grad, vorzugsweise unter 45 Grad, zur Längerichtung des extrudierten Bandes bzw. zur vorgesehenen Schrumpfrichtung verlaufen.

16. Verfahren zur Herstellung einer Umhüllung für langgestrecktes Gut unter Verwendung eines Bandes nach einem oder mehreren der Ansprüche 1 bis 6 bzw. eines Bandes, welches nach einem oder mehreren der Ansprüche 7 bis 15 hergestellt ist, dadurch gekennzeichnet, daß das Band nach Art einer Manschette um den Gegenstand herumgelegt, an seinen Randbereichen verschweißt und anschließend geschrumpft wird.

17. Verfahren nach Anspruch 16, dadurch gekennzeichnet, daß die Verschweißung durch Spiegelschweißen erfolgt.

18. Verfahren nach Anspruch 16 oder 17. dadurch gekennzeichnet, daß die Randbereiche während oder nach der Verschweißung vernetzt werden.

19. Verfahren zur kontinuierlichen Umhüllung von durchlaufendem langgestreckten Gut unter Verwendung eines Bandes nach einem oder mehreren der Ansprüche 1 bis 6 bzw. eines nach einem oder mehreren der Ansprüche 7 bis 15 hergestellten Bandes, dadurch gekennzeichnet, daß das von einer Vorratsspule ablaufende Band kontinuierlich um das durchlaufende langgestreckte Gut zu einem Schlitzrohr geformt, an seinen Längskanten verschweißt und nach dem Schweißen zum Schrumpfen gebracht wird.

20. Verfahren nach Anspruch 19, dadurch gekennzeichnet, daß als langgestreckte Gut ein gewelltes Metallrohr verwendet wird und daß die Schrumpfung so durchgeführt wird, daß das Bandmaterial nahezu dem Wellenverlauf des Metallrohres folgt.

21. Verfahren nach Anspruch 16 oder einem der folgenden, dadurch gekennzeichnet, daß nach dem Verschweißen die im Bereich der Schweißnaht gelegene Verdickung entfernt wird und danach geschrumpft wird.

22. Abzweigmuffe für Kabel oder Leitungen unter Verwendung eines Bandes nach einem oder mehreren der Ansprüche 1 bis 6, dadurch gekennzeichnet, daß die Muffe aus zwei Bändern (1) besteht, die an ihren Längskanten (3a,3b) miteinander stumpf verschweißt sind und die Abzweige durch nochmalige Verschweißung (15) einer bestimmten Länge der Schweißnähte gebildet sind.

23. T-förmige Abzweigmuffe für Kabel oder Leitungen unter Verwendung eines Bandes nach einem oder mehreren der Ansprüche 1 bis 6, dadurch gekennzeichnet, daß die Muffe aus einem kreuzförmigen Band (1) hergestellt ist, welches über den T-förmigen Abzweig gelegt und an den Berührungslinien (3a,3b) verschweißt ist.

24. Doppel-T-förmige Abzweigmuffe für Kabel oder Leitungen unter Verwendung eines Bandes nach einem oder mehreren der Ansprüche 1 bis 6, dadurch gekennzeichnet, daß zwei identische kreuzförmige Bänder übereinandergelegt und an den in Längsrichtung des Kabels bzw. der Leitung verlaufenden Berührungskanten verschweißt sind.

Fig 1

Fig 2

Fig 3

Fig 4

Fig 5

Fig 6

Fig 7

Fig 8

Fig 8a

Fig 9

Fig 10

Fig 11

Fig 12

Fig 13

## EINSCHLÄGIGE DOKUMENTE

EP 87108824.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | <u>US - A - 4 366 201</u> (CHANGANI et al.) <br> * Spalte 1, Zeile 31 - Spalte 4, Zeile 11; Spalte 4, Zeile 48 - Spalte 5, Zeile 17; Spalte 5, Zeile 66 - Spalte 6, Zeile 30; Fig. 1,5-9 * <br> -- | 1-3,5, 10,11, 13,14, 16,21-23 | H 02 G 15/18 <br> H 01 B 13/10 <br> F 16 L 59/14 <br> B 29 C 61/06 |
| A | <u>DD - A - 152 236</u> (ADW) <br> * Seite 3, Zeile 1 - Seite 4, Zeile 6 * <br> -- | 1,10 | |
| X | <u>GB - A - 2 057 788</u> (GUTEHOFFNUNGS-HÜTTE) <br> * Ansprüche 1,3; Seite 2, Zeilen 49-53, 72-74; Seite 3, Zeilen 1-59; Fig. 2,9 * <br> -- | 1,3,5-8,16, 19 | |

| | | | RECHERCHIERTE SACHGEBIETE (Int. Cl.4) |
|---|---|---|---|
| A | <u>DE - A1 - 2 108 918</u> (SIEMENS) <br> * Seite 3, Zeile 22 - Seite 4, Zeile 10; Fig. 1,4 * <br> -- | 19 | H 02 G 15/00 <br> H 01 B 13/00 <br> F 16 L 59/00 <br> B 29 C |
| A | <u>DE - A1 - 2 611 518</u> (SIGMAFORM) <br> * Ansprüche 4,5; Seite 7, Zeilen 1-22; Fig. 2 * <br> ---- | 1,2,7, 9,10, 16 | B 29 D   7/00 |

Der vorliegende Recherchenbericht wurde für alle Patentansprüche erstellt.

| Recherchenort | Abschlußdatum der Recherche | Prüfer |
|---|---|---|
| WIEN | 13-11-1987 | KUTZELNIGG |